# FASCICULE DE BREVET EUROPEEN

(11) **EP 2 678 194 B1**
(45) Date de publication et mention de la délivrance du brevet: **20.01.2016**
(21) Numéro de dépôt: 12709920.8
(22) Date de dépôt: 16.02.2012
(51) Int. Cl.: B62D 25/20, B60R 22/22, B60R 22/24

(54) **SUPPORT D'ENROULEUR DE CEINTURE DE SECURITE**
HALTERUNG FÜR EINEN SICHERHEITSGURTAUFROLLER
BRACKET FOR SAFETY BELT WINDER

(30) Priorité: 21.02.2011 FR 1151394
(43) Date de publication de la demande: 01.01.2014
(73) Titulaire: Renault S.A.S., 92100 Boulogne-Billancourt (FR)
(72) Inventeur: MAUDUIT, Thomas, F-78960 Voisins Le Bretonneux (FR); CAMUS, Guillaume, F-78280 Guyancourt (FR); TABUTEAU, Pascal, F-78180 Montigny le Bretonneux (FR)
(86) Numéro de dépôt international: PCT/FR2012/050337
(87) Numéro de publication internationale: WO 2012/114020

(56) Documents cités:
- EP-A1- 2 181 899
- DE-U1- 20 005 145
- FR-A1- 2 937 930
- GB-A- 2 315 983
- US-B1- 6 773 048

## Description

L'invention se situe dans le domaine des systèmes d'ancrage pour ceinture de sécurité de véhicule automobile, notamment dans le cas de véhicule à propulsion électrique ou hybride (voir par exemple le document GB-A-2 315 983).

Afin d'assurer une autonomie suffisante aux véhicules à propulsion électrique ou hybride, des batteries d'accumulateur doivent être embarquées. Le volume de ces batteries est sensiblement plus important que celui occupé par un réservoir d'énergie traditionnelle comme par exemple un réservoir d'essence. Une solution consiste à exploiter un volume délimité pour partie sous le siège des passagers arrière du véhicule et pour partie sous le siège du conducteur et du passager avant, en modifiant le profil du plancher de manière à isoler ce volume de l'habitacle.

Les sièges du véhicule reposent alors sur une zone du plancher qui est surélevée par rapport à celle du véhicule similaire construit pour être propulsé par un moteur thermique.

Les enrouleurs de ceinture de sécurité périphériques du véhicule, c'est-à-dire ceux traditionnellement fixés sur des renforts de pied milieu du véhicule ou sur d'autres zones de carrosserie périphérique du véhicule, peuvent alors se trouver verticalement au même niveau que la partie supérieure du plancher du véhicule. L'emplacement où doit être fixé l'enrouleur se trouve alors confiné dans un espace réduit entre la carrosserie du véhicule et le plancher, rehaussé sur la quasi-totalité de la largeur du véhicule.

L'opération de vissage d'un support d'enrouleur de ceinture, qui se fait usuellement en boulonnant plusieurs vis à partir de l'intérieur du véhicule pour assembler le support d'enrouleur au pied milieu ou à la carrosserie, devient alors malaisé avec des outils de production classiques, voire impossible.

L'invention a pour but de proposer un support pour enrouleur de ceinture de sécurité de passager avant de véhicule, permettant un assemblage fiable et compatible avec les contraintes de la chaîne d'assemblage du support d'enrouleur à l'intérieur d'un véhicule à plancher surélevé.

L'invention a également pour but de proposer une géométrie de support d'enrouleur qui facilite les opérations de mise en place de certains câbles du véhicule et qui permet, vu sa position proche du plancher du véhicule, de faciliter la fixation des éléments d'habillage intérieurs du véhicule.

A cette fin, un support en tôle emboutie pour enrouleur d'une ceinture de sécurité de véhicule automobile, comporte:
- un premier plan d'assemblage entaillé sur un premier bord de tôle par un profil de maintien en rotation d'un enrouleur, et comportant un orifice permettant de passer une vis de fixation d'un enrouleur,
- un second plan d'assemblage sensiblement parallèle au premier plan d'assemblage, déporté par rapport au premier plan d'assemblage, et comportant un perçage apte à recevoir une vis, le premier et le second plan d'assemblage étant reliés par un premier embouti tridimensionnel permettant de rigidifier le support en flexion suivant au moins deux directions,
- un troisième plan d'assemblage formant un angle nul ou un angle inférieur à 20° avec le premier plan d'assemblage, le troisième plan d'assemblage prolongeant le premier plan d'assemblage sur un côté de ce plan d'assemblage opposé au premier bord de tôle, ou longeant le premier plan d'assemblage sur un côté de ce plan d'assemblage opposé au premier bord de tôle le long d'une première ligne terminant en partie inférieure le premier plan d'assemblage et formant ligne de séparation entre le premier plan d'assemblage et le troisième plan d'assemblage, le troisième plan d'assemblage présentant un bord libre sur son côté opposé au premier bord de tôle.

Le premier et le second plan d'assemblage sont déportés au sens que les plans géométriques correspondants, qui sont donc sensiblement parallèles, sont distincts. La valeur du déport, qui est la distance entre les deux plans géométriques, peut être par exemple supérieure à 20mm.

De manière préférentielle, le perçage du second plan d'assemblage est positionné de manière à pouvoir accueillir non seulement une vis, mais également une rondelle entourant la vis et venant en appui plan sur plan contre le second plan d'assemblage. Cette rondelle a de préférence un diamètre supérieur ou égal à 20mm.

Selon un mode de réalisation préféré, le support comporte un deuxième embouti de bord tombé réalisé sur un bord de la tôle opposé à un bord rigidifié par le premier embouti, le rebord du bord tombé étant orienté en direction du plan géométrique du second plan d'assemblage.

Avantageusement, le premier plan d'assemblage est en outre percé d'au moins un orifice non circulaire.

Selon un mode de réalisation avantageux, le premier plan d'assemblage est bordé en partie par une ou plusieurs zones de tôle plane, permettant de fixer une agrafe de type trombone sur ces zones de tôle plane.

Le premier plan d'assemblage peut être percé d'un groupe de quatre orifices alignés deux à deux, dont au moins deux orifices sont de forme allongée suivant une même direction, par exemple la direction de la ligne joignant ces deux orifices allongés ou du premier bord de tôle.

Le groupe de quatre orifices comprend de préférence un premier groupe de deux orifices séparé, suivant une direction sensiblement parallèle au premier bord de tôle, d'un second groupe de deux orifices, par le profil de maintien du dérouleur.

Avantageusement, le bord tombé suit une portion de ligne en "S" bordant le premier plan d'assemblage, la ligne en "S" élargissant le support au voisinage de deux des quatre orifices alignés. La ligne en "S" s'entend ici comme le profil défini soit par l'arête d'extrémité de la tôle, soit par la frontière entre le premier plan d'assemblage et le rayon du bord tombé.

Avantageusement, le second plan d'assemblage est déporté par rapport au premier plan d'assemblage d'une distance comprise entre 35mm et 60mm. Il peut par exemple être déporté d'une valeur voisine de 40mm, ce qui permet d'interposer une électrode de soudage entre le premier plan d'assemblage et le plan défini par un renfort de pied milieu sur lequel est vissé le second plan d'assemblage.

Selon un autre aspect, un châssis de véhicule automobile comporte un support d'enrouleur de ceinture soudé sur une face latérale oblique ou verticale d'une traverse de siège de véhicule, la traverse étant elle-même soudée par une extrémité sensiblement horizontale débordant de la face latérale, avec un rebord de plancher du véhicule. La traverse de siège peut être une traverse arrière de siège avant.

Selon au autre aspect de l'invention, un véhicule automobile peut comporter un châssis comme ci-dessus, le support d'enrouleur de ceinture étant en outre fixé sur un renfort d'un pied milieu du véhicule et servant de support de fixation pour au moins un câble électrique. Avantageusement, le support d'enrouleur sert également de support de fixation pour un ou plusieurs éléments d'habillage intérieur de l'habitacle du véhicule.

La présente invention sera mieux comprise à la lecture de la description détaillée de quelques modes de réalisation pris à titre d'exemples nullement limitatifs, et illustrés par les dessins annexés sur lesquels :
- la figure 1 est une vue en perspective d'un support pour enrouleur selon l'invention,
- la figure 2 est une vue schématique en coupe dans le sens transverse au véhicule, et montre le support en position assemblée sur le véhicule,
- la figure 3 est une vue schématique en perspective du support en position dans le véhicule supportant l'enrouleur associé,
- la figure 4 est une autre vue en perspective d'un autre support pour enrouleur selon l'invention.

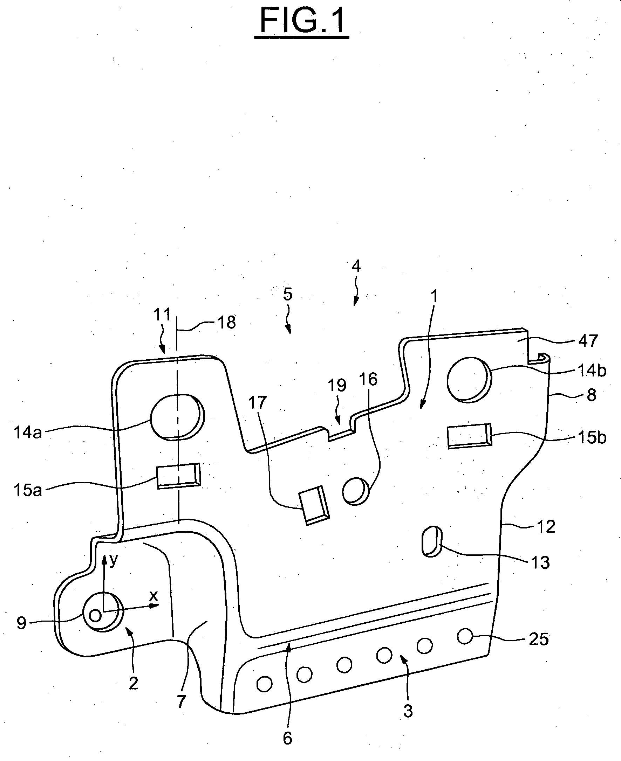

Comme illustré sur la figure 1, un support 4 pour enrouleur (non représenté sur la figure 1) est réalisé dans une tôle épaisse emboutie.

Selon le modèle de véhicule, les plus grandes dimensions du support d'enrouleur peuvent être par exemple comprises entre 10 et 20 cm. Eu égard aux efforts transmis et aux exigences de sécurité, des tôles épaisses, par exemple en épaisseur proche de 2 mm, peuvent être utilisées, dans des aciers à haute limite élastique tels que par exemple, du XE 280D également désigné suivant la norme EN 10268 (1999) par H 280 LA.

On pourrait également choisir d'autres aciers aptes à l'emboutissage et présentant une limite élastique supérieure à une valeur minimale appropriée qui peut être de l'ordre de 280MPa.

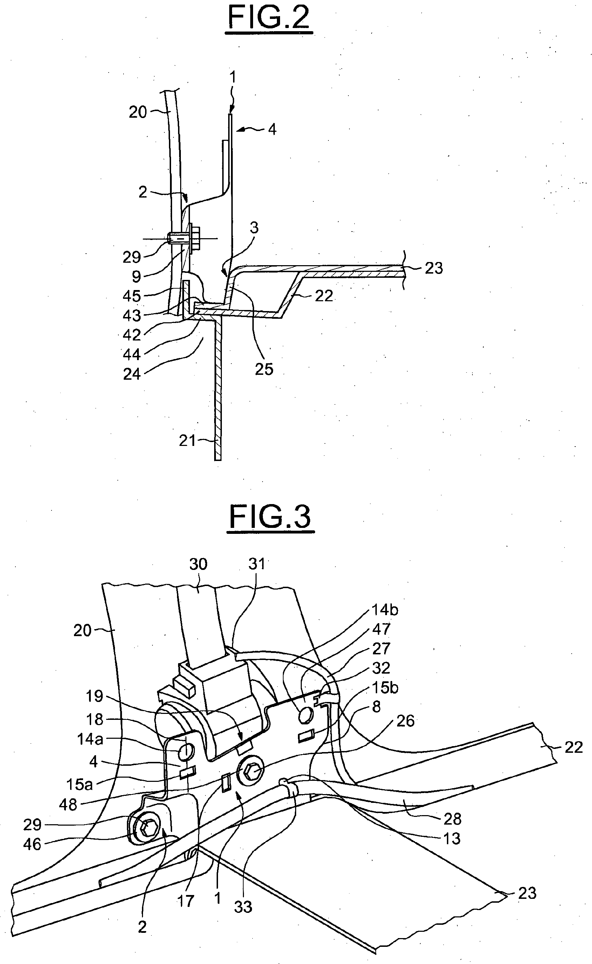

Le support 4 présente une première zone ou un premier plan 1, qui peut correspondre au plan initial de la tôle dans laquelle est réalisé le support. Ce premier plan 1 est notamment percé d'un orifice 16 permettant de passer une vis de fixation de l'enrouleur. A côté de cet orifice 16 se trouve un orifice non circulaire 17 permettant de passer un ergot de prépositionnement de l'enrouleur. Un premier bord 11 de la tôle, occupant sur la figure 1 la partie supérieure du dérouleur, est entaillé par un profil sensiblement rectangulaire présentant en partie inférieure une encoche 19. Le profil entaillé 5, l'encoche 19 et l'orifice 17 permettent de maintenir l'enrouleur en rotation et de loger deux ergots se logeant respectivement dans l'encoche 19 et dans l'orifice 17. L'un ou l'autre de ces ergots peut en outre présenter une base élargie permettant de maintenir l'enrouleur plaqué contre la tôle pendant le vissage de l'enrouleur sur le support (figure 3).

D'autres orifices sont également ménagés dans le premier plan d'assemblage 1 : des orifices allongés 13, 15a, 15b, ainsi qu'un orifice, par exemple, circulaire 14b et un orifice 14a, par exemple de forme ovale et de diamètre proche de l'orifice 14b (figure 1).

Le premier plan d'assemblage 1 se termine en partie inférieure par une ligne 6 opposée au premier bord de tôle, cette ligne 6 pouvant représenter une ligne fictive de séparation avec un troisième plan 3 délimitant une zone de soudage du support 4 (figures 2 et 3). Le troisième plan 3 peut se trouver dans le même plan géométrique que le premier plan d'assemblage 1, ou peut former un angle modéré, typiquement inférieur à 20°, de préférence, inférieur ou égal à 10° avec le premier plan d'assemblage 1. Par ailleurs, le troisième plan 3 présente un bord libre sur son côté opposé au premier bord 11 de la tôle. Un tel bord libre du troisième plan 3 forme ainsi une limite au troisième plan d'assemblage 3 et donc au support 4 pour enrouleur.

Par ailleurs, dans un mode de réalisation préféré, le troisième plan d'assemblage 3 forme un angle nul avec le premier plan d'assemblage 1. Un tel troisième plan d'assemblage 3 dans le prolongement du premier plan d'assemblage 1 permet ainsi, notamment, d'effectuer moins d'étapes de mise en forme du support 4 pour enrouleur.

La tôle constituant le support 4 est emboutie de manière à créer un second plan d'assemblage 2, sensiblement parallèle au premier plan d'assemblage 1, et relié avec ce premier plan d'assemblage par un embouti tridimensionnel 7 permettant de rigidifier le support 4 suivant au moins deux directions en flexion. Le second plan d'assemblage 2 est traversé par un perçage 9 de diamètre suffisant pour passer une vis d'assemblage. La distance du perçage 9 par rapport au relief tridimensionnel 7 est telle qu'une rondelle puisse être appliquée autour d'une vis traversant ce perçage 9, par exemple une rondelle ayant un diamètre extérieur de l'ordre de 20 mm, ou de manière générale une rondelle ayant un diamètre extérieur supérieur ou égal à 15 mm.

Sur la figure 1 est représenté un repère Oxy, O étant le centre du perçage 9 et x et y étant deux axes perpendiculaires dont les directions sont comprises dans le second plan d'assemblage 2.

L'axe x est ici un axe du second plan d'assemblage 2 sensiblement parallèle au bord inférieur 6 du premier plan d'assemblage, et l'axe y est un axe perpendiculaire à x, également compris dans le second plan d'assemblage 2. Le plan géométrique Oxy passe donc par le second plan d'assemblage 2 et est sensiblement parallèle au premier plan d'assemblage 1.

Des zones de soudage 25 sont représentées sur le troisième plan d'assemblage 3. Ces zones indiquent des lieux où le support 4 peut être soudé à une poutre transversale du véhicule comme décrit plus loin.

Sur le côté 12 de la tôle opposé à l'embouti tridimensionnel 7, un bord tombé 8 est réalisé. Ce bord tombé contribue, d'une part, à rigidifier le support 4 dans le sens d'une flexion autour de l'axe x et permet, d'autre part, de passer la main d'un opérateur le long de ce côté 12, de l'avant vers l'arrière de la figure (c'est-à-dire de l'intérieur vers l'extérieur du véhicule en position de montage du support 4), sans blesser l'opérateur. Le bord tombé 8 est orienté vers l'extérieur du véhicule afin de ne pas blesser la main de l'opérateur, ce qui revient à dire que le rebord du bord tombé est orienté en direction du plan géométrique passant par le second plan d'assemblage, c'est-à-dire le plan Oxy.

Le bord tombé 8 peut se poursuivre ou ne pas se poursuivre le long du troisième plan d'assemblage 3. En partie supérieure du support 4 (partie supérieure par rapport à la figure 1 et partie supérieure par rapport à la position du support monté dans le véhicule), le bord tombé 8 est interrompu, ménageant ainsi un rebord de tôle plane 47 le long du rebord 12 de la tôle. Cette zone 47 de tôle plane permet par exemple de venir fixer sur le rebord de la tôle une agrafe de type trombone.

La figure 2 illustre, sur une vue schématique en coupe, la manière dont le support 4 est assemblé à l'intérieur du véhicule. On retrouve sur la figure 2 des éléments communs à la figure 1, les mêmes éléments étant alors désignés par les mêmes références.

Le support 4 est assemblé au moyen d'une vis 29, entourée d'une rondelle 46 (figure 3), et traversant le perçage 9 du second plan d'assemblage 2. La vis 29 traverse également un renfort de pied milieu 20.

Le support 4 est soudé au niveau de points de soudage 25, réalisés le long du troisième plan d'assemblage 3 et solidarisant le support 4 avec une portion oblique latérale d'une poutre 23. Le bord libre du troisième plan d'assemblage 3 est tel qu'il permet un ajustement parfait du support 4 contre la portion oblique latérale de la poutre 23, laquelle est, par exemple, une poutre arrière de siège avant de véhicule automobile et est assemblée par-dessus un plancher 22 du véhicule, de manière à supporter une partie des efforts des sièges avant. La poutre 23 et le plancher 22 présentent, sur leurs extrémités latérales droite ou gauche, respectivement des bandes de tôle 43 et 42, horizontales, et se superposant l'une à l'autre. Les bandes de tôle 42 et 43 sont également superposées à une portion horizontale 44 d'un renfort de bas volet 21.

Les trois bandes de tôle 42, 43 et 44 sont assemblées par un soudage en triple épaisseur. L'assemblage du support 4 et de la poutre 23 est fait dans l'ordre suivant :
- le support 4 est d'abord soudé le long de son troisième plan d'assemblage, au niveau des points de soudage 25, avec la poutre 23,
- la poutre 23 est ensuite soudée par un soudage en triple épaisseur sur le plancher 22 et le bas volet 21, le long des bandes de recouvrement 42, 43 et 44. Pour ce faire, il est nécessaire de pouvoir passer une électrode de soudage entre le premier plan d'assemblage 1 du support 4 et un rebord vertical 45 du bas volet 21. Le second plan d'assemblage 2 du support 4 se trouvant sensiblement à la verticale de ce rebord 45 du renfort de bas volet, l'électrode doit donc pouvoir passer dans l'intervalle séparant le premier plan d'assemblage 1 et le second plan d'assemblage 2 du support 4.

Le diamètre classique des électrodes utilisées étant de l'ordre de 20 mm, la distance entre le premier plan d'assemblage 1 et le second plan d'assemblage 2 devra donc être supérieure à ces 20 mm. Un espace minimal étant nécessaire autour de l'électrode, des intervalles minimaux définis dans une plage de 35mm à 60 mm, entre les premier et second plan d'assemblage, peuvent être préconisés, par exemple un intervalle entre les deux plans de l'ordre de 40 mm.

La figure 3 est une vue simplifiée en perspective du support 4, en configuration monté sur le véhicule et supportant un enrouleur 31 de ceinture de sécurité 30. On retrouve sur la figure 3 des éléments communs aux figures précédentes, les mêmes éléments étant alors désignés par les mêmes références.

On voit notamment sur la figure 3, une vis d'assemblage 29 entourée d'une rondelle 46 et maintenant le second plan d'assemblage 2 contre le renfort 20 de pied milieu du véhicule. La rondelle 46 peut présenter un diamètre extérieur de l'ordre de 25mm à 30mm, afin de répartir les contraintes de pression générées par l'appui de la tête de vis.

L'enrouleur 31 est assemblé par une vis 26, également entourée d'une rondelle 48, sur le premier plan d'assemblage 1. Un support de câble 33 est clipsé à l'intérieur de l'orifice non circulaire 13, permettant à un câble 28 d'être accroché contre la face interne -au véhicule- du support 4. Un second support de câble 32, muni d'une attache de type agrafe ou trombone, est accroché à un rebord plan 47 du support 4, par exemple une zone de rebord plan située au dessus du bord tombé 8.

Deux ergots de l'enrouleur 31 sont insérés respectivement dans l'orifice de prépositionnement 17 et dans l'encoche supérieure 19 du support 4, contribuant ainsi au maintien en rotation de l'enrouleur 31. L'enrouleur 31 est représenté ici avant la pose d'un habillage intérieur (non représenté) du véhicule. Les quatre orifices 14a, 15a, 14b et 15b sont en effet destinés à recevoir ultérieurement quatre ergots d'accrochage d'un habillage du véhicule. Les orifices 14b et 15b, situés l'un au dessus de l'autre, peuvent par exemple servir à un accrochage en deux temps d'un premier couple d'ergots de l'habillage, un premier ergot de taille plus réduite étant introduit dans l'orifice 15b de manière à prépositionner l'habillage, puis un second ergot de taille plus importante étant inséré dans l'orifice 14b, de manière à assurer un meilleur maintien de l'habillage.

De manière similaire, un second couple d'ergots peut être inséré dans les orifices 15a et 14a. On remarquera que les orifices 15a et 14a ont une dimension suivant l'axe x horizontal, qui est supérieure à la dimension suivant le même axe x horizontal des orifices 14b et 15b. L'axe x est ici horizontal, mais pourrait être choisi, de manière générale, de manière à être un axe sensiblement parallèle au premier bord de tôle, ou à être un axe parallèle à la ligne 6 séparant le premier 1 et le troisième 3 plan d'assemblage.

Les orifices 14b et 15b, dont la largeur correspond sensiblement à la largeur des ergots que l'on insère dedans, permettent ainsi de bloquer l'habillage suivant l'axe x. Les orifices 14a et 15a, dont la largeur est supérieure à celle des ergots insérés permettent, eux, d'accommoder d'éventuelles variations dimensionnelles dé fabrication de l'habillage. On remarque que le rebord de bord tombé 8 suit une courbe en S qui s'élargit vers la partie haute du support 4, c'est-à-dire vers les orifices 14b et 15b. On obtient ainsi une largeur réduite du support 4 en partie basse, qui permet par exemple de passer la main d'un opérateur derrière le support, afin d'effectuer les opérations de passage de câble derrière ce support 4. On bénéficie en même temps d'une partie élargie du support 4 en partie supérieure, qui permet un bon maintien de l'habillage accroché aux orifices 14a, 15a, 14b, 15b.

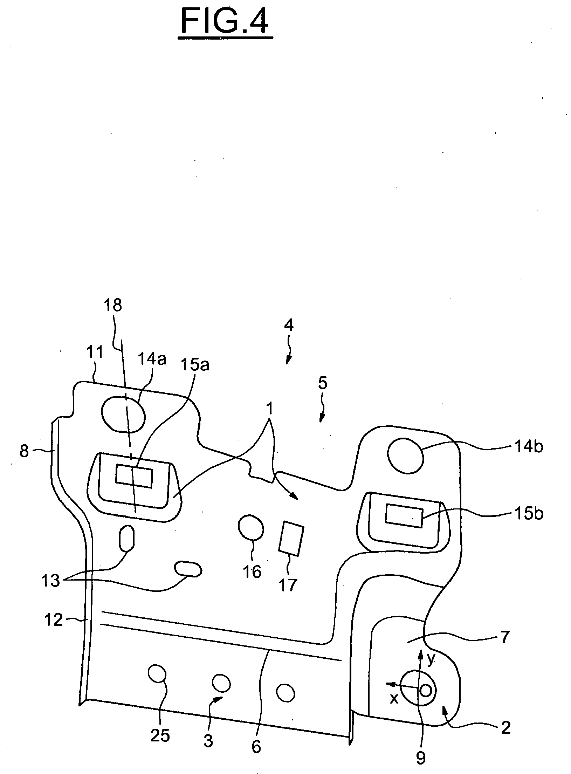

La figure 4 illustre une autre variante de support 4 pour enrouleur selon l'invention. On retrouve sur la figure 4 des éléments communs à la figure 1, les mêmes éléments étant alors désignés par les mêmes références. On remarque, en particulier sur la figure 4, un nombre différent et des positions différentes d'orifices 13 non circulaires destinés au clipsage de supports de câbles.

Dans cette variante de réalisation, le premier plan d'assemblage 1 est embouti au voisinage de deux des orifices 15a et 15b de fixation de l'habillage intérieur. Ces formes embouties permettent de modifier l'angle que forment les ergots correspondants de fixation de l'habillage avec le plan d'assemblage 1, qui occupe une position sensiblement verticale dans le véhicule. L'angle ainsi induit entre l'horizontale et l'axe de l'ergot permet d'optimiser l'angle entre la surface de l'ergot et le plan moyen de l'habillage. On facilite ainsi le démoulage de la pièce d'habillage intérieur, qui est réalisée par injection plastique.

On remarque que sur la figure 4, le support 4 est vu par son côté extérieur au véhicule, c'est-à-dire à la fois du côté du rebord du bord tombé 8 et du côté du second plan d'assemblage 2. La patte constituée par le second plan d'assemblage 2 et par le relief embouti tridimensionnel 7 se trouve en relief vers l'avant de la figure 4.

Plus particulièrement, dans cette variante de réalisation représentée sur la figure 4, le bord tombé 8 s'étend jusqu'au bord libre du troisième plan d'assemblage 3, de sorte à former un bord tombé sur tout le bord du support 4. Par ailleurs, dans la variante de réalisation représentée sur la figure 4, le troisième plan d'assemblage 3 présente, de préférence, un angle nul par rapport au premier plan d'assemblage 1.

L'objet de l'invention ne se limite pas aux exemples décrits et peut se décliner en de nombreuses variantes. On peut envisager des méthodes d'assemblage entre le plan d'assemblage 3 et la poutre 23, autres que le soudage. Le support 4 pourrait par exemple être collé sur la poutre 23. Le premier plan d'assemblage 1 étant destiné à occuper une position sensiblement verticale dans le véhicule, l'angle entre le premier plan d'assemblage 1 et le troisième plan d'assemblage 3 est imposé par l'angle, par rapport à la verticale, du rebord de poutre 23 sur lequel est soudé le support 4.

On peut donc envisager un support 4 où le plan d'assemblage 3 serait en continuité avec le plan d'assemblage 1, par exemple si la poutre 23 présente un rebord latéral vertical, ou si le cahier des charges du support autorise que le plan d'assemblage 1 soit placé dans la continuité du plan latéral de la poutre 23 au lieu d'être vertical.

On peut envisager des contours extérieurs différents pour le support 4 et/ou un embouti tridimensionnel 7 différent de celui illustré.

Dans des modes de réalisation à coût réduit, on peut envisager de relier le premier plan d'assemblage 1 et le second plan d'assemblage 2 par un embouti bidimensionnel, c'est-à-dire assimilable à un profil extrudé. On privilégie alors la résistance du support 4 en flexion par rapport à une seule direction de flexion.

Le support d'enrouleur selon l'invention permet à la fois d'optimiser le processus de montage à l'intérieur d'un véhicule à plancher surélevé et d'optimiser les points de fixation d'une partie des câblages et de l'habillage intérieur d'un tel véhicule.

## Revendications

1. Support (4) en tôle emboutie pour enrouleur (31) d'une ceinture de sécurité (30) de véhicule automobile, comportant :
- un premier plan (1) d'assemblage entaillé sur un premier bord de tôle (11) par un profil de maintien (5) en rotation d'un enrouleur, et comportant un orifice (16) permettant de passer une vis (26) de fixation d'un enrouleur (31),
- un second plan d'assemblage (2) sensiblement parallèle au premier plan d'assemblage (1), déporté par rapport au premier plan d'assemblage (1), et comportant un perçage (9) apte à recevoir une vis (29), le premier (1) et le second (2) plan d'assemblage étant reliés par un premier embouti tridimensionnel (7) permettant de rigidifier le support (4) en flexion suivant au moins deux directions (x, y),
- un troisième plan d'assemblage (3) formant un angle nul ou un angle inférieur à 20° avec le premier plan d'assemblage (1), le troisième plan d'assemblage (3) prolongeant le premier plan (1) d'assemblage sur un côté de ce plan d'assemblage opposé au premier bord de tôle (11), ou longeant le premier plan d'assemblage (1) sur un côté de ce plan d'assemblage opposé au premier bord de tôle (11) le long d'une première ligne (6) terminant en partie inférieure le premier plan d'assemblage (1) et formant ligne de séparation entre le premier plan d'assemblage (1) et le troisième plan (3) d'assemblage, le troisième plan d'assemblage (3) présentant un bord libre sur son côté opposé au premier bord de tôle (11)

2. Support selon la revendication 1, comportant un deuxième embouti (8) de bord tombé réalisé sur un bord de la tôle opposé à un bord rigidifié par le premier embouti (7), le rebord du bord tombé étant orienté en direction d'un plan géométrique (O,x,y) du second plan d'assemblage (2).

3. Support selon les revendications 1 ou 2, dans lequel le premier plan d'assemblage (1) est en outre percé d'au moins un orifice non circulaire (17, 15a, 15b, 14a).

4. Support selon l'une des revendications précédentes, dans lequel le premier plan d'assemblage (1) est bordé en partie par une ou plusieurs zones de tôle plane (47), permettant de fixer une agrafe (32) de type trombone sur ces zones de tôle plane (47).

5. Support selon la revendication 3, dans lequel le premier plan d'assemblage (1) est percé d'un groupe de quatre orifices (14a, 15a, 14b, 15b) alignés deux à deux, dont au moins deux orifices (14a, 15a) sont de forme allongée suivant une même direction.

6. Support (4) selon la revendication précédente, dans lequel le groupe de quatre orifices (14a, 15a, 14b, 15b) comprend un premier groupe de deux orifices (14a, 15a) séparé, suivant une direction sensiblement parallèle au premier bord de tôle (11), d'un second groupe de deux orifices (14b, 15b), par le profil (5) de maintien du dérouleur.

7. Support selon les revendications 2 et 6, dans lequel le bord tombé (8) suit une portion de ligne en "S" bordant le premier plan d'assemblage (1), la ligne en "S" élargissant le support (4) au voisinage de deux (14b, 15b) des quatre orifices alignés.

8. Support selon l'une des revendications précédentes, dans lequel le second plan d'assemblage (2) est déporté par rapport au premier plan d'assemblage (1) d'une distance comprise entre 35 et 60mm.

9. Support selon l'une quelconque des revendications précédentes, dans lequel le profil (5) de maintien en rotation de l'enrouleur est configuré pour recevoir une portion de contour de l'enrouleur, permettant ainsi de maintenir l'enrouleur en rotation autour de l'axe de l'orifice (16).

10. Support selon l'une quelconque des revendications précédentes, dans lequel le profil de maintien (5) est un profil ouvert, formant au moins une entaille (19) ouverte vers l'extérieur de la périphérie de la tôle, configurée pour recevoir un élément en relief de l'enrouleur.

11. Châssis de véhicule automobile, comportant un support (4) d'enrouleur (31) de ceinture (30) selon l'une quelconque des revendications 1 à 10, soudé sur une face latérale oblique ou verticale d'une traverse de siège (23) du véhicule, la traverse étant elle-même soudée par une extrémité sensiblement horizontale (43) débordant de la face latérale, avec un rebord (42) de plancher (22) du véhicule.

12. Véhicule automobile comportant un châssis selon la revendication 11, dans lequel le support (4) d'enrouleur de ceinture est fixé sur un renfort (20) d'un pied milieu de véhicule automobile, et sert de support de fixation pour au moins un câble électrique (27, 28).

## Patentansprüche

1. Halterung (4) aus tiefgezogenem Blech für einen Aufroller (31) eines Sicherheitsgurts (30) eines Kraftfahrzeugs, umfassend:
- eine erste Montageebene (1), die an einem ersten Blechrand (11) durch ein Profil (5) zum Halten eines Aufrollers in Drehung eingekerbt ist, und umfassend eine Öffnung (16), die es ermöglicht, eine Schraube (26) zur Befestigung eines Aufrollers (31) durchzuführen,
- eine zweite Montageebene (2) im Wesentlichen parallel zur ersten Montageebene (1), die in Bezug zur ersten Montageebene (1) versetzt ist, und umfassend eine Bohrung (9), die geeignet ist, eine Schraube (29) aufzunehmen, wobei die erste (1) und die zweite Montageebene (2) durch ein erstes dreidimensionales tiefgezogenes Teil (7) verbunden sind, das es ermöglicht, die Halterung (4) in mindestens zwei Richtungen (x, y) gegen die Biegung zu versteifen,
- eine dritte Montageebene (3), die einen Winkel gleich Null oder einen Winkel unter 20° mit der ersten Montageebene (1) bildet, wobei die dritte Montageebene (3) die erste Montageebene (1) auf einer Seite dieser Montageebene gegenüber dem ersten Blechrand (11) verlängert oder die erste Montageebene (1) auf einer Seite dieser Montageebene gegenüber dem ersten Blechrand (11) entlang einer ersten Linie (6), die im unteren Teil die erste Montageebene (1) beendet und eine Trennlinie zwischen der ersten Montageebene (1) und der dritten Montageebene (3) bildet, weiterführt, wobei die dritte Montageebene (3) einen freien Rand auf ihrer dem ersten Blechrand (11) gegenüberliegenden Seite aufweist.

2. Halterung nach Anspruch 1, umfassend ein zweites tiefgezogenes Teil (8) mit einem abfallenden Rand, das an einem Rand des Blechs gegenüber einem durch das erste tiefgezogene Teil (7) versteiften Rand verwirklicht ist, wobei die Umrandung des abfallenden Randes in Richtung einer geometrischen Ebene (O, x, y) der zweiten Montageebene (2) ausgerichtet ist.

3. Halterung nach den Ansprüchen 1 oder 2, bei der die erste Montageebene (1) ferner mit mindestens einer nicht kreisförmigen Öffnung (17, 15a, 15b, 14a) durchbohrt ist.

4. Halterung nach einem der vorhergehenden Ansprüche, bei der die erste Montageebene (1) zum Teil von einer oder mehreren flachen Blechzonen (47) umrandet ist, die es ermöglichen, eine Klammer (32) vom Typ Büroklammer auf diesen flachen Blechzonen (47) zu befestigen.

5. Halterung nach Anspruch 3, bei der die erste Montageebene (1) von einer Gruppe von vier Öffnungen (14a, 15a, 14b, 15b), die zwei und zwei ausgerichtet sind, durchbohrt ist, wobei mindestens zwei Öffnungen (14a, 15a) eine in eine selbe Richtung längliche Form haben.

6. Halterung (4) nach dem vorhergehenden Anspruch, bei der die Gruppe von vier Öffnungen (14a, 15a, 14b, 15b) eine erste Gruppe von zwei Öffnungen (14a, 15a) umfasst, die entlang einer Richtung im Wesentlichen parallel zum ersten Blechrand (11) von einer zweiten Gruppe von zwei Öffnungen (14b, 15b) durch das Halteprofil (5) des Aufrollers getrennt ist.

7. Halterung nach den Ansprüchen 2 und 6, bei der der abfallende Rand (8) einem S-förmigen Linienabschnitt folgt, der die erste Montageebene (1) umrandet, wobei die S-förmige Linie die Halterung (4) in der Nähe von zwei (14b, 15b) der vier ausgerichteten Öffnungen erweitert.

8. Halterung nach einem der vorhergehenden Ansprüche, bei der die zweite Montageebene (2) in Bezug zur ersten Montageebene (1) um einen Abstand zwischen 35 und 60 mm versetzt ist.

9. Halterung nach einem der vorhergehenden Ansprüche, bei der das Profil (5) zum Halten des Aufrollers in Drehung derart ausgeführt ist, dass es einen Konturenabschnitt des Aufrollers aufnimmt, wodurch es möglich ist, den Aufroller in Drehung um die Achse der Öffnung (16) zu halten.

10. Halterung nach einem der vorhergehenden Ansprüche, bei der das Halteprofil (5) ein offenes Profil ist, das mindestens eine nach außen zur Peripherie des Blechs offene Kerbe (19) bildet, die dazu vorgesehen ist, ein vorspringendes Element des Aufrollers aufzunehmen.

11. Fahrgestell eines Kraftfahrzeugs, umfassend eine Halterung (4) eines Aufrollers (31) eines Sicherheitsgurts (30) nach einem der Ansprüche 1 bis 10, die auf eine schräge oder vertikale Seitenfläche einer Querstrebe eines Sitzes (23) des Fahrzeugs geschweißt ist, wobei die Querstrebe selbst mit einem im Wesentlichen horizontalen Ende (43), das über die Seitenfläche hinausragt, mit einem Rand (42) des Bodens (22) des Fahrzeugs verschweißt ist.

12. Kraftfahrzeug, umfassend ein Fahrgestell nach Anspruch 11, bei dem die Halterung (4) eines Sicherheitsgurtaufrollers auf einer Verstärkung (20) eines Mittelfußes des Kraftfahrzeugs befestigt ist und als Befestigungsstütze für mindestens ein elektrisches Kabel (27, 28) dient.

## Claims

1. Support (4), made of stamped sheet metal, for a winder (31) for a safety belt (30) of a motor vehicle, comprising:
- a first assembly plane (1) in which is cut out, on a first sheet metal edge (11), a profile (5) for holding a winder in rotation, and which comprises an opening (16) through which can pass a screw (26) for attaching a winder (31),
- a second assembly plane (2), essentially parallel to the first assembly plane (1) and offset with respect to the first assembly plane (1), comprising a hole (9) able to receive a screw (29), the first (1) and second (2) assembly planes being connected by a first three-dimensional stamped portion (7) by means of which it is possible to stiffen the support (4) in flexion in at least two directions (x, y),
- a third assembly plane (3) forming a zero angle or an angle less than 20° with the first assembly plane (1), the third assembly plane (3) extending the first assembly plane (1) on one side of this assembly plane, opposite to the first sheet metal edge (11), or running along the first assembly plane (1) on one side of this assembly plane, opposite to the first sheet metal edge (11), along a first line (6) to limit in the lower portion the first assembly plane (1) and forming a line of separation between the first assembly plane (1) and the third assembly plane (3), the third assembly plane (3) having a free edge on its side opposite the first sheet metal edge (11).

2. Support according to Claim 1, comprising a second stamped portion (8) having a turned-down edge created on an edge of the sheet metal opposite an edge stiffened by the first stamped portion (7), the rim of the turned-down edge being oriented in the direction of a geometric plane (O, x, y) of the second assembly plane (2).

3. Support according to Claim 1 or 2, in which the first assembly plane (1) furthermore has, passing through it, at least one non-circular opening (17, 15a, 15b, 14a).

4. Support according to one of the preceding claims, in which the first assembly plane (1) is bounded in part by one or more planar sheet metal regions (47) making it possible to attach a fastener (32) of the clip type on these planar sheet metal regions (47).

5. Support according to Claim 3, in which the first assembly plane (1) has, passing through it, a group of four openings (14a, 15a, 14b, 15b) arranged in pairs, of which at least two openings (14a, 15a) are elongate in one and the same direction.

6. Support (4) according to the preceding claim, in which the group of four openings (14a, 15a, 14b, 15b) comprises a first group of two openings (14a, 15a) separated, in a direction essentially parallel to the first sheet metal edge (11), from a second group of two openings (14b, 15b), by the profile (5) for holding the winder.

7. Support according to Claims 2 and 6, in which the turned-down edge (8) follows an S-shaped portion bounding the first assembly plane (1), the S-shaped line extending the support (4) in the vicinity of two (14b, 15b) of the four aligned openings.

8. Support according to one of the preceding claims, in which the second assembly plane (2) is offset with respect to the first assembly plane (1) by a distance of between 35 and 60 mm.

9. Support according to any one of the preceding claims, in which the profile (5) for holding the winder in rotation is configured so as to receive a portion of the contour of the winder, such that the winder can be held in rotation about the axis of the opening (16).

10. Support according to any one of the preceding claims, in which the holding profile (5) is an open profile, forming at least one notch (19) which is open toward the outside of the periphery of the sheet metal, configured so as to receive a raised element of the winder.

11. Chassis for a motor vehicle, comprising a support (4) for a winder (31) for a belt (30) according to any one of Claims 1 to 10, welded to an oblique or vertical lateral face of a seat crosspiece (23) of the vehicle, the crosspiece being itself welded, by means of a projecting, essentially horizontal end (43) of the lateral face, with a rim (42) of the floor (22) of the vehicle.

12. Motor vehicle comprising a chassis according to Claim 11, in which the support (4) for a belt winder is attached to a reinforcement (20) of a motor vehicle centre pillar, and serves as an attachment support for at least one electrical cable (27, 28).
